# EUROPÄISCHE PATENTANMELDUNG

(11) **EP 1 129 777 A2**
(43) Veröffentlichungstag der Anmeldung: **05.09.2001**
(21) Anmeldenummer: 01104429.4
(22) Anmeldetag: 27.02.2001
(51) Int. Cl.: B01J 47/00

(54) **Ionentauscheranlage**

(30) Priorität: 04.03.2000 DE 10010739
(71) Anmelder: Karl Spiegl GmbH, 71106 Magstadt (DE)
(72) Erfinder: Spiegl, Peter, 71134 Aidlingen (DE); Heybach, Klaus, 45476 Mühlheim (DE)
(74) Vertreter: Steimle, Josef, Dipl.-Ing.

(57) **Zusammenfassung**

Die Erfindung betrifft eine Ionentauscheranlage und ein Verfahren zum Entkeimen eines Ionentauschers in einer Ionentauscheranlage, wobei in dem Ionentauscher eine Heizstrecke parallel geschaltet wird und mittels Flüssigkeit, die im Kreislauf durch die Heizstrecke und den Ionentauscher der Ionentauscher entkeimt wird.

## Beschreibung

Die Erfindung betrifft eine Ionentauscheranlage mit einem Zulauf für eine zu behandelnde Flüssigkeit, einem Ionentauscher und einem Ablauf. Die Erfindung betrifft auch ein Verfahren zum thermischen Entkeimen von Ionentauschern in einer Ionentauscheranlage.

Verfahren und Vorrichtungen zur Entkeimung von Ionentauscheranlagen, insbesondere von Enthärtungsanlagen, sind hinreichend bekannt. Diese Anlagen werden vielfach zur Behandlung von Trinkwasser eingesetzt. Derartige Anlagen dienen z.B. zur Enthärtung von Trinkwasser oder mit diesen Anlagen wird Wasser für pharmazeutische Zwecke, in der Lebensmittelindustrie oder bei der Herstellung von Getränken vorbehandelt. Da Ionenaustauscher im täglichen Einsatz mehr oder weniger stark verkeimen und dann das behandelte Wasser mit diesen Keimen belastet wird, müssen die Ionentauscheranlagen regelmäßig entkeimt werden. Hierfür dienen in der Regel Oxydationsmittel wie Chlor oder Ozon, mit denen die Anlagen entkeimt werden. Derartige Oxydationsmittel sind jedoch für organische Filtermaterialien nicht geeignet, da diese durch die Chemikalien abgebaut werden und dadurch u.U. das Wasser mit Abbauprodukten belastet wird.

Es ist auch bekannt, dass Ionentauscheranlagen mit Dampf entkeimt werden. Hierfür bedarf es jedoch aufwendiger Dampfbereiter und die Anlage muss vor der Entkeimung vollständig entleert werden.

Der Erfindung liegt daher die Aufgabe zugrunde, eine Vorrichtung und ein Verfahren bereitzustellen, mit welcher bzw. welchem Ionentauscher auf einfache, schnelle und preiswerte Art und Weise entkeimt werden können.

Diese Aufgabe wird bei einer Ionentauscheranlage der eingangs genannten Art erfindungsgemäß dadurch gelöst, dass parallel zum Ionentauscher eine Rezirkulationsstrecke geschaltet ist, die zusammen mit Ionenaustauscherstrecke eine Ringleitung bildet und in diese Ringleitung eine Heizstrecke geschaltet ist.

Bei der erfindungsgemäßen Ionentauscheranlage ist parallel zum Ionentauscher ein zweiter Flüssigkeitsstrang vorgesehen, der im Ionentauscherbetrieb der Anlage von der Anlage nicht durchströmt wird. Erst zur Entkeimung des Ionentauschers wird diese Heizstrecke zugeschaltet und die gesamte Anlage z. B. über ein erstes und ein zweites Absperrventil vom Zulauf und vom Ablauf abgetrennt. Die Abtrennung kann auch ohne Ventile erfogen. Z.B. kann in der Heizstrecke ein Rückschlagventil vorgesehen sein, welches eine Durchströmung parallel zum Ionentauscher verhindert. In der Heizstrecke wird die Flüssigkeit z.B. über einen Flüssigkeitserwärmer, insbesondere einen Wärmetauscher, erwärmt und mittels einer Rezirkulationspumpe im Kreislauf durch den Ionentauscher geleitet. Hierfür kann die bereits vorhandene Rezirkulationspumpe verwendet werden oder eine in der Heizstrecke vorgesehene Rezirkulationspumpe.

Das Zuschalten bzw. Abschalten der Heizstrecke erfolgt bevorzugt über an ihrem Zulauf bzw. an ihrem Ablauf vorgesehene Absperrventile oder durch Aktivierung der Rezurkulationspumpe. Zur Regelung des Flüssigkeitserwärmers ist in der Ringleitung, insbesondere nach dem Flüssigkeitserwärmer, eine Temperaturüberwachung vorgesehen. Diese Temperaturüberwachung kann über eine Regelstrecke mit dem Flüssigkeitserwärmer, insbesondere mit dessen Energieversorgung gekoppelt sein. Bei Vorhandensein von Reindampf kann mittels eines Injektors die Erwärmung durchgeführt werden.

Um Totraumstrecken zu minimieren, können die Absperrventile am Zulauf der Ionentauscheranlage und Ablauf der Heizstrecke sowie am Ablauf der Ionentauscheranlage und Zulauf der Heizstrecke jeweils zu einem 3-Wegeventil zusammengeschaltet sein. Die Verwendung von 3-Wegeventilen hat außerdem den Vorteil, dass diese relativ einfach ansteuerbar sind.

Bei einer Weiterbildung ist vorgesehen, dass der Flüssigkeitskreislauf ein Ablassventil aufweist. Über dieses Ablassventil kann die für die Entkeimung verwendete Flüssigkeit ganz oder teilweise abgelassen und durch frische Flüssigkeit, welche über das erste Absperrventil zugeleitet wird, ersetzt werden. Auf diese Weise kann nach erfolgter Entkeimung die gesamte Anlage auch gekühlt werden.

Eine andere Ausführungsform sieht vor, dass in der Heizstrecke eine Kühleinrichtung vorgesehen ist. Diese Kühleinrichtung kann als separates Bauteil ausgeführt oder in den Flüssigkeitserwärmer, z.B. einen Wärmetauscher, integriert sein.

Vorteilhaft ist eine Regeleinrichtung vorgesehen, die zeitgesteuert die Heizstrecke zuschaltet und die gesamte Ionentauscheranlage vollautomatisch entkeimt.

Die eingangs genannte Aufgabe wird außerdem mittels eines Verfahrens gelöst, welches die Merkmale des Anspruchs 18 aufweist.

Mit einem derartigen Verfahren wird der wesentliche Vorteil erzielt, dass lediglich der Ionentauscher auf die für die Entkeimung erforderliche Temperatur gebracht wird und die übrigen Komponenten der Anlage vor thermischen Belastungen verschont bleiben. Das erfindungsgemäße Verfahren und die erfindungsgemäße Vorrichtung bietet den Vorteil, dass der Ionentauscher chemikalienfrei und dadurch rückstandsfrei entkeimt wird.

Weitere Vorteile, Merkmale und Einzelheiten der Erfindung ergeben sich aus den Unteransprüchen sowie der nachfolgenden Beschreibung, in der unter Bezugnahme auf die Zeichnung, zwei besonders bevorzugte Ausführungsbeispiele im Einzelnen beschrieben sind. Dabei können die in der Zeichnung dargestellten und in den Ansprüchen sowie in der Beschreibung erwähnte Merkmale jeweils einzeln für sich oder in beliebiger Kombination erfindungswesentlich sein. In der Zeichnung zeigen:
- Figur 1: ein Schaltschema einer ersten Ausführungsform der erfindungsgemäßen Ionentauscheranlage; und
- Figur 2: ein Schaltschema einer zweiten Ausführungsform der erfindungsgemäßen Ionentauscheranlage.

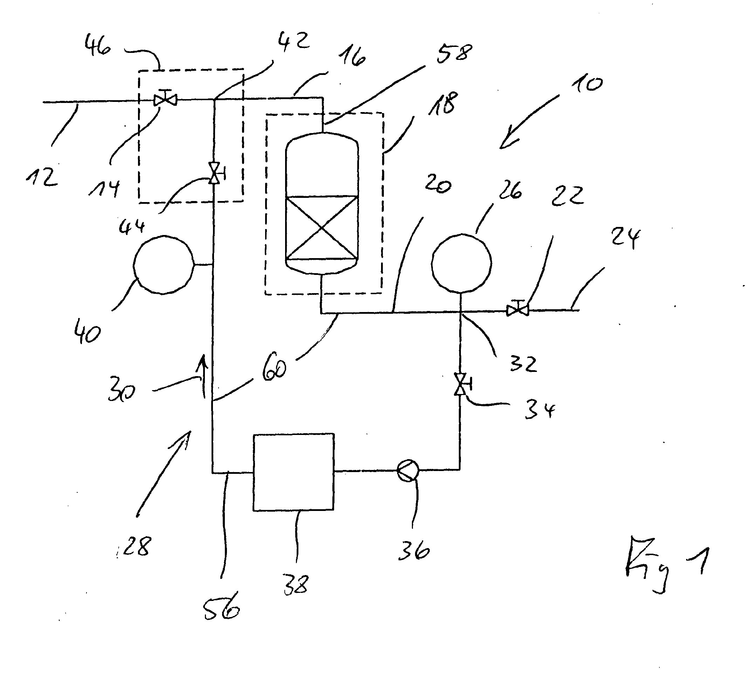

In der Figur 1 ist mit dem Bezugszeichen 10 eine Ionentauscheranlage bezeichnet, die einen Zulauf 12, ein erstes Absperrventil 14, eine Verbindungsleitung 16, einen Ionentauscher 18, eine Ablaufleitung 20 mit einem nicht dargestellten Filter, ein zweites Absperrventil 22 sowie einen Ablauf 24 aufweist. Außerdem ist eine Temperaturüberwachung 26 vorgesehen.

Diese Ionentauscheranlage 10 weist außerdem eine insgesamt mit 28 bezeichnete Heizstrecke auf, die parallel zum Ionentauscher 18 geschaltet ist. Diese Heizstrecke 28 wird in Richtung des Pfeils 30 durchströmt. Sie besitzt einen Anschluss 32, dem unmittelbar ein Absperrventil 34 folgt.

Im Anschluss an das Absperrventil 34 befindet sich eine Rezirkulationspumpe 36 und ein Flüssigkeitserwärmer 38 sowie eine Temperaturüberwachung 40. Nach der Temperaturüberwachung 40 befindet sich in unmittelbarer Nähe zu einem Anschluss 42 ein weiteres Absperrventil 44. Die Absperrventile 14 und 44 sind bei diesem Ausführungsbeispiel als 3-Wegeventil 46 oder als Rückschlagventil ausgeführt.

Die Absperrventile 22 und 34 können ebenfalls als 3-Wegeventil oder als Rückschlagventil ausgeführt sein. Der Abschnitt zwischen den Anschlüssen 32 und 42 mit der Heizstrecke 28 bildet eine Rezirkulationsstrecke 56. Der den lonentauscher 18 aufweisende Abschnitt bildet eine Ionentauscherstrecke 58. Beide Strecken 56 und 58 bilden zusammen eine Ringleitung 60, die während des Entkeimungsvorganges durchströmt wird.

Bei normalem Ionentauscherbetrieb sind die Absperrventile 34 und 44 geschlossen und die Absperrventile 14 und 22 geöffnet. Der Ionentauscher 18 wird von Flüssigkeit durchströmt, die die Ionentauscheranlage 10 über den Ablauf 24 verlässt.

Zur Entkeimung werden die Absperrventile 14 und 22 geschlossen und die Absperrventile 34 und 44 geöffnet. Über die Rezirkulationspumpe 36 wird die Flüssigkeit in Richtung des Pfeils 30 durch den Ionentauscher 18 im Kreislauf geleitet und gleichzeitig mittels des Flüssigkeitsewärmers 38 erwärmt. Die Temperatur wird mittels der Temperaturüberwachung 40 auf einen bestimmten, vorgegebenen Wert eingestellt. Die Flüssigkeit wird solange im Kreislauf gefördert, bis der Ionentauscher 18 vollständig entkeimt ist. Dann kann die Flüssigkeit entweder über einen (in der Figur 1 nicht dargestellten) Ablauf 48 aus der Heizstrecke 28 abgelassen und durch neue Flüssigkeit ersetzt werden, die über das Absperrventil 14, welches hierzu geöffnet wird, zugeleitet wird. Auf diese Weise kann die gesamte Ionentauscheranlage 10 auch gekühlt werden.

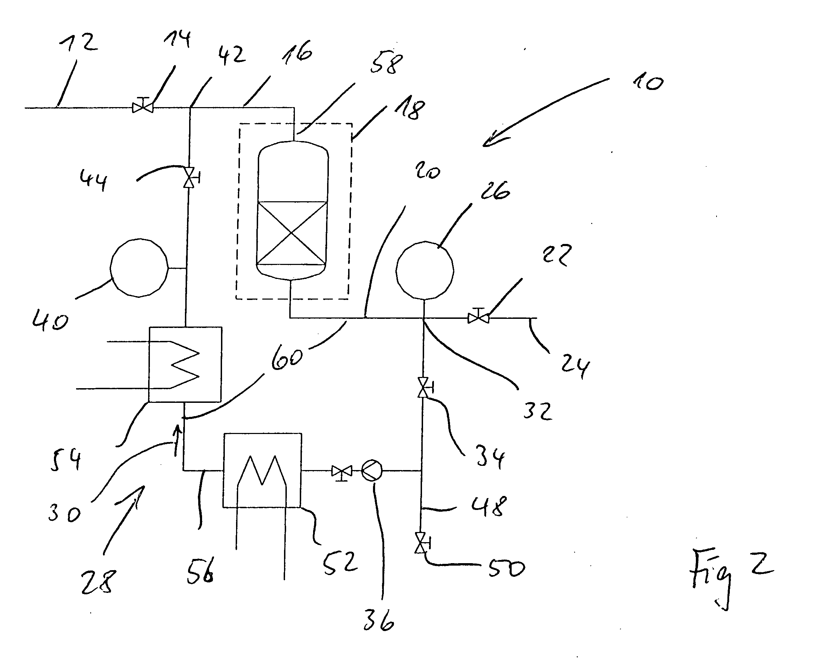

Beim Ausführungsbeispiel der Figur 2 ist die Heizstrecke 28 mit einem Ablauf 48 versehen, über welchen, nach dem Öffnen eines Absperrventils 50, die Flüssigkeit ausgeleitet werden kann. Die Heizstrecke 28 ist bei diesem Ausführungsbeispiel mit zwei Wärmetauschern 52 und 54 versehen, wobei der Wärmetauscher 52 zum Aufheizen der Flüssigkeit und der Wärmetauscher 54 zum Abkühlen der Flüssigkeit dient. Im Übrigen entspricht dieses Ausführungsbeispiel dem Ausführungsbeispiel der Figur 1.

## Patentansprüche

1. Ionentauscheranlage (10) mit einem Zulauf (12) für eine zu behandelnde Flüssigkeit, einem Ionentauscher (18) und einem Ablauf (24), dadurch gekennzeichnet, dass parallel zum Ionentauscher (18) eine Rezirkulationsstrecke (56) geschaltet ist, die zusammen mit Ionenaustauscherstrecke (58) eine Ringleitung (60) bildet und in diese Ringleitung (60) eine Heizstrecke (28) geschaltet ist.

2. Ionentauscheranlage nach Anspruch 1, dadurch gekennzeichnet, dass vor den Ionentauscher (18) ein erstes Absperrventil (14) und/oder nach den Ionentauscher (18) ein zweites Absperrventil (22) geschaltet ist bzw. sind.

3. Ionentauscheranlage nach Anspruch 2, dadurch gekennzeichnet, dass die Heizstrecke (28) zwischen die beiden Absperrventile (14 und 22) geschaltet ist.

4. Ionentauscheranlage nach einem der vorhergehenden Ansprüche, dadurch gekennzeichnet, dass die Heizstrecke (28) ein Rückschlagventil enthalt, welches verhindert, dass die die Heizstrecke (28) von ihrem Ablauf (42) in Richtung ihres Zulaufes (32) durchströmt wird.

5. Ionentauscheranlage nach einem der vorhergehenden Ansprüche, dadurch gekennzeichnet, dass die Heizstrecke (28) einen Flüssigkeitserwärmer (38) aufweist.

6. Ionentauscheranlage nach einem der vorhergehenden Ansprüche, dadurch gekennzeichnet, dass die Heizstrecke (28) eine Rezirkulationspumpe (36) aufweist.

7. Ionentauscheranlage nach einem der vorhergehenden Ansprüche, dadurch gekennzeichnet, dass die Heizstrecke (28) an ihrem Zulauf (32) und/oder an ihrem Ablauf (42) ein Absperrventil (34 bzw. 44) aufweist.

8. Ionentauscheranlage nach Anspruch 7, dadurch gekennzeichnet, dass das erste Absperrventil (14) und das am Ablauf (42) der Heizstrecke (28) vorgesehene Absperrventil (44) als 3-Wegeventil (46) ausgebildet ist.

9. Ionentauscheranlage nach Anspruch 7, dadurch gekennzeichnet, dass das zweite Absperrventil (22) und das am Zulauf (32) der Heizstrecke (28) vorgesehene Absperrventil (34) als 3-Wegeventil ausgebildet ist.

10. Ionentauscheranlage nach einem der vorhergehenden Ansprüche, dadurch gekennzeichnet, dass in die Heizstrecke (28), insbesondere in Strömungsrichtung (30), nach einem Flüssigkeitserwärmer (38) eine Temperaturüberwachung (44) eingeschaltet ist.

11. Ionentauscheranlage nach einem der vorhergehenden Ansprüche, dadurch gekennzeichnet, dass die Heizstrecke (28) mit Ionentauscher (18) einen Flüssigkeitskreislauf bildet.

12. Ionentauscheranlage nach Anspruch 11, dadurch gekennzeichnet, dass im Flüssigkeitskreislauf ein Ablassventil (50) vorgesehen ist.

13. Ionentauscheranlage nach Anspruch 11 oder 12, dadurch gekennzeichnet, dass im Flüssigkeitskreislauf ein Druckaufnehmer vorgesehen ist.

14. Ionentauscheranlage nach Anspruch 13, dadurch gekennzeichnet, dass der Druckaufnehmer mit dem ersten Absperrventil (14) gekoppelt ist.

15. Ionentauscheranlage nach Anspruch 2, dadurch gekennzeichnet, dass die Heizstrecke (28) einen Wärmetauscher (52) aufweist.

16. Ionentauscheranlage nach einem der vorhergehenden Ansprüche, dadurch gekennzeichnet, dass die Heizstrecke (28) mit einer Kühleinrichtung, insbesondere einem Wärmetauscher (54) versehen ist.

17. Ionentauscheranlage nach einem der vorhergehenden Ansprüche, dadurch gekennzeichnet, dass eine die Heizstrecke (28) zu- oder abschaltende, insbesondere zeitgesteuerte, Regeleinrichtung vorgesehen ist.

18. Verfahren zum thermischen Entkeimen von Ionentauschern in einer Ionentauscheranlage (10), insbesondere nach einem der vorhergehenden Ansprüche, wobei dem Ionentauscher (18) eine Heizstrecke (28) zu geschaltet wird und die zu behandelnde Flüssigkeit in der Heizstrecke (28) erwärmt und die erwärmte Flüssigkeit im Kreislauf durch den Ionentauscher (18) und wieder zurück in die Heizstrecke (28) geleitet wird.

19. Verfahren nach Anspruch 18, dadurch gekennzeichnet, dass die Flüssigkeit nach der Entkeimung in der Heizstrecke (28) gekühlt wird.

20. Verfahren nach einem der Ansprüche 18 oder 19, dadurch gekennzeichnet, dass während der Behandlung des Ionentauschers (18) ein Teil der Flüssigkeit entnommen und durch neue Flüssigkeit ersetzt wird.

21. Verfahren nach Anspruch 20, dadurch gekennzeichnet, dass mittels der neuen Flüssigkeit die Anlage (10) gekühlt wird.
